# EUROPEAN PATENT APPLICATION

(11) **EP 4 361 104 A1**
(43) Date of publication of application: **01.05.2024**
(21) Application number: 23172271.1
(22) Date of filing: 09.05.2023
(51) Int. Cl.: C01G 45/12, C01G 53/00, H01M 4/505

(54) **POSITIVE ELECTRODE ACTIVE MATERIAL AND LITHIUM SECONDARY BATTERY COMPRISING THE SAME**

(30) Priority: 27.10.2022 KR 20220140025
(71) Applicant: ECOPRO BM CO., LTD., Cheongju-si, Chungcheongbuk-do 28116 (KR)
(72) Inventor: LIM, Ra Na, 28116 Cheongju-si, Chungcheongbuk-do (KR); JUNG, Hyun Su, 28116 Cheongju-si, Chungcheongbuk-do (KR); LIM, Kyung Min, 28116 Cheongju-si, Chungcheongbuk-do (KR); KIM, Seong Kyun, 28116 Cheongju-si, Chungcheongbuk-do (KR); PARK, Eun Hee, 28116 Cheongju-si, Chungcheongbuk-do (KR)
(74) Representative: Vossius & Partner Patentanwälte Rechtsanwälte mbB

(57) **Abstract**

The present invention relates to a positive electrode active material and a lithium secondary battery including the same, and more particularly, to a positive electrode active material including an overlithiated lithium manganese-based oxide, which is able to prevent the degradation of the electrochemical properties of a lithium secondary battery, including rate characteristics, caused by an excess of lithium and manganese in the lithium manganese-based oxide by inducing the growth of primary particles constituting the lithium manganese-based oxide, and prevent the lifetime deterioration of a lithium secondary battery by reducing side reactions between the lithium manganese-based oxide and a liquid electrolyte particularly during high-voltage operation, and at the same time, inhibiting or mitigating the release of a transition metal from the lithium manganese-based oxide, and a lithium secondary battery including the same.

## Description

### BACKGROUND

### 1. Field of the Invention

The present invention relates to a positive electrode active material and a lithium secondary battery including the same, and more particularly, to a positive electrode active material including an overlithiated lithium manganese-based oxide, which is able to prevent the degradation of the electrochemical properties of a lithium secondary battery, including rate characteristics, caused by an excess of lithium and manganese in the lithium manganese-based oxide by inducing the growth of primary particles constituting the lithium manganese-based oxide, and prevent the lifetime deterioration of a lithium secondary battery by reducing side reactions between the lithium manganese-based oxide and a liquid electrolyte particularly during high-voltage operation, and at the same time, inhibiting or mitigating the release of a transition metal from the lithium manganese-based oxide, and a lithium secondary battery including the same.

### 2. Discussion of Related Art

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials, and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be LiCoO₂, LiMn₂O₄, LiNiO₂, LiMnO₂, or an oxide in which Ni, Co, Mn or Al is complexed.

Among the positive electrode active materials, LiCoO₂ is most widely used due to excellent lifetime characteristics and charging/discharging efficiency, but it is expensive due to cobalt being a limited resource, which is used as a raw material, and thus has a disadvantage of limited price competitiveness.

Lithium manganese oxides such as LiMnO₂ and LiMn₂O₄ have advantages of excellent thermal safety and low costs, but also have problems of small capacity and poor high-temperature characteristics. In addition, while a LiNiO₂-based positive electrode active material exhibits a battery characteristic such as a high discharge capacity, due to cation mixing between Li and a transition metal, it is difficult to synthesize the LiNiO₂-based positive electrode active material, thereby causing a big problem in rate characteristics.

In addition, depending on the intensification of such a cation mixing, a large amount of Li by-products is generated. Since most of the Li by-products include LiOH and Li₂CO₃, they may cause gelation in preparation of a positive electrode paste, or cause gas generation according to repeated charging/discharging after the manufacture of an electrode. In addition, residual Li₂CO₃ in the Li by-product increases cell swelling to act as the cause of degrading a lifetime characteristic.

Various candidate materials for compensating for these shortcomings of conventional positive electrode active materials are being suggested.

In one example, there is on-going research to use an overlithiated lithium manganese-based oxide in which an excess of Mn among transition metals is included and a lithium content is higher than the sum of the contents of the transition metals as a positive electrode active material for a lithium secondary battery. Such an overlithiated lithium manganese-based oxide is also referred to as an overlithiated layered oxide (OLO).

Although the OLO has an advantage in that it can theoretically exhibit high capacity under a high voltage operating environment, in fact, due to an excessive amount of Mn contained in the oxide, the electric conductivity is relatively low, and thus the rate characteristic (rate capability) of a lithium secondary battery using OLO is low. As such, when the rate characteristic (rate capability) is low, there is a problem in which charge/discharge capacity and lifetime efficiency (capacity retention) are degraded during the cycling of a lithium secondary battery.

In addition, during the cycling of a lithium secondary battery using OLO, a decrease in charging/discharging capacity or voltage decay may be caused by a phase transition caused by the migration of a transition metal in the lithium manganese-based oxide. For example, when a transition metal in a lithium manganese-based oxide having a layered crystal structure migrates in an unintended direction to induce phase transition, spinel or a crystal structure similar thereto may be generated entirely and/or partially in the lithium manganese-based oxide.

To solve the above-described problems, although research of changing the composition of OLO has been conducted, such an attempt has not yet reached a commercialization level.

### SUMMARY OF THE INVENTION

In the lithium secondary battery market, the growth of lithium secondary batteries for electric vehicles is driving the market, and accordingly, the demand for positive electrode active materials used in lithium secondary batteries is also continuously increasing.

For example, conventionally, to ensure stability, lithium secondary batteries using LFP have mainly been used, but recently, the use of a nickel-based lithium composite oxide having a larger energy capacity per weight than LFP tends to be increasing.

In addition, recently, nickel-based lithium composite oxides mainly used as positive electrode active materials for high-capacity lithium secondary batteries essentially use three-component metal elements such as nickel, cobalt and manganese or nickel, cobalt and aluminum. However, since cobalt is not only unstable in supply, but also excessively expensive compared to other raw materials, a positive electrode active material with a new composition, which can reduce a cobalt content or exclude cobalt is needed.

Considering these circumstances, an overlithiated lithium manganese-based oxide can meet the above-mentioned expectations of the market, but there a limitation that the lithium manganese-based oxide still lacks electrochemical properties or stability to replace a commercially-available positive electrode active material such as a ternary lithium composite oxide of the composition of nickel-cobalt-manganese (NCM) or nickel-cobalt-aluminum (NCA).

For example, when a spinel or a similar crystalline structure thereto is entirely and/or partially formed in a lithium manganese-based oxide as a transition metal in the lithium manganese-based oxide migrates in an unintended direction, it has been described above that a decrease in charging/discharging capacity or a voltage decay may occur during cycling of a lithium secondary battery using OLO.

However, compared with other types of commercialized positive electrode active materials, even when a conventional overlithiated lithium manganese-based oxide has disadvantages in terms of electrochemical properties and/or stability, the present inventors confirmed that the overlithiated lithium manganese-based oxide may also exhibit commercially available levels of electrochemical properties and stability by inducing the growth of primary particles constituting the lithium manganese-based oxide to make the primary particles have a different shape from the conventional shape.

Therefore, the present invention is directed to providing a positive electrode active material including an overlithiated lithium manganese-based oxide, in which the growth of primary particles constituting the lithium manganese-based oxide is induced to make the primary particles constituting the lithium manganese-based oxide have a different shape from those that are known so far.

Particularly, the present invention is directed to providing a positive electrode active material, which is able to prevent a rapid decrease in battery performance caused by side reactions that occur during an initial battery reaction under a high voltage condition by reducing the specific surface area of the lithium manganese-based oxide through induction of the grain or particle growth of primary particles constituting the lithium manganese-based oxide.

In addition, the present invention is directed to providing a positive electrode active material that can mitigate a decrease in diffusivity of lithium ions mediated by the primary particle as the size of the primary particle increases by inducing the crystal growth or particle growth of a primary particle constituting the lithium manganese-based oxide.

Meanwhile, the present inventors confirmed that, as a lithium manganese-based oxide is repeatedly charged/discharged, the possibility of the release of a transition metal from a particle surface is higher than that of a ternary lithium composite oxide. Particularly, Mn included in excess in the lithium manganese-based oxide is highly likely to be released from the particle surface.

When a transition metal is released from the lithium manganese-based oxide, the released transition metal may react with a liquid electrolyte on the surface of the lithium manganese-based oxide to form impurities. The impurities not only enhance the surface resistance of the lithium manganese-based oxide, but also become a cause of degrading the intercalation/deintercalation efficiency of lithium ions via the lithium manganese-based oxide.

In addition, the transition metal released from the lithium manganese-based oxide or the impurities formed by the reaction between the released transition metal and a liquid electrolyte may migrate to a negative electrode using the liquid electrolyte as a medium, and may be deposited on the surface of the negative electrode.

For example, side reactions with the liquid electrolyte may occur on the surface of the lithium manganese-based oxide, or Mn²⁺ included in excess in the lithium manganese-based oxide may be released into the liquid electrolyte due to the structural change (the change in crystal structure) of the lithium manganese-based oxide. The Mn²⁺ released into the liquid electrolyte may migrate to the surface of the negative electrode using the liquid electrolyte as a medium during formation or charging/discharging to have reactions with various materials (a battery, a liquid electrolyte, an electrode, impurities, etc.) present in the battery, and as a result, impurities including Mn²⁺, an Mn metal or Mn-containing compounds (e.g., MnCO₃, MnO, MnF₂, etc.) are present on the surface of the negative electrode.

The transition metal or impurities deposited on the surface of the negative electrode may rapidly increase the resistance of the negative electrode, and such an abnormal resistance phenomenon is a typical cause of accelerating the lifetime deterioration of a lithium secondary battery.

Particularly, since a lithium secondary battery using the lithium manganese-based oxide as a positive electrode active material has a higher operating voltage than a lithium secondary battery using another commercially-available ternary lithium composite oxide as a positive electrode active material, it is vulnerable to the above-described problem.

However, until now, there is no technology for resolving the release of a transition metal from the overlithiated lithium manganese-based oxide and a problem caused thereby.

As described above, compared with other types of commercialized positive electrode active materials, the conventional overlithiated lithium manganese-based oxides have disadvantages in terms of electrochemical properties and/or stability. However, the present inventors confirmed that, when a barrier layer that can control the bulk composition of the lithium manganese-based oxide, and at the same time, inhibit or mitigate the release of a transition metal from the surface of the lithium manganese-based oxide is included, the overlithiated lithium manganese-based oxide may also exhibit commercially available levels of electrochemical properties and stability.

Accordingly, the present invention is directed to providing a positive electrode active material including an overlithiated lithium manganese-based oxide, which is able to inhibit or mitigate the release of a transition metal from the lithium manganese-based oxide by forming a barrier layer on the surface of the lithium manganese-based oxide.

Moreover, the present invention is directed to providing a lithium secondary battery that uses a positive electrode including the positive electrode active material defined herein to realize high stability by preventing a decrease in electrochemical properties of a lithium secondary battery, including rate characteristics, caused by an excess of lithium and manganese in conventional OLO, and reducing side reactions between the positive electrode active material and a liquid electrolyte during high-voltage operation.

To solve the above-described technical problems, one aspect of the present invention provides a positive electrode active material including a lithium manganese-based oxide in which a phase belonging to a C2/m space group and a phase belonging to an R3-m space group are dissolved or complexed.

Generally, in a commercially-available ternary lithium composite oxide with a nickel-cobalt-manganese (NCM) or nickel-cobalt-aluminum (NCA) composition, the phase belonging to the R3-m space group is present as a single phase, but in the overlithiated lithium manganese-based oxide defined herein, a phase belonging to a C2/m space group and a phase belonging to an R3-m space group are dissolved or complexed.

In one embodiment, the lithium manganese-based oxide includes a secondary particle formed by aggregating a plurality of primary particles.

Here, the average value of the minor axis lengths of the primary particles constituting the lithium manganese-based oxide may be 130 nm or more, and preferably, 130 nm or more and less than 400 nm by doping the oxide precursor with a halogen while inducing the crystal growth or particle growth of the primary particle during calcination of an oxide precursor of the lithium manganese-based oxide.

In addition, among 20 primary particles selected in the order from longest-to-shortest minor axis lengths from the primary particles exposed on the surface of the secondary particle from an SEM image of the secondary particle, the proportion of primary particles having a minor axis length of 100 nm or more may be more than 80% and 100% or less.

The average value of the minor axis lengths of the primary particles may be measured for the primary particles exposed on the surface of the secondary particle from an SEM image of the secondary particle (e.g., calculated from 20 primary particles selected in the order from longest-to-shortest minor axis lengths from the primary particles exposed on the surface of the secondary particle from the SEM image of the secondary particle).

In addition, on at least a part of the surface of the primary particle and/or the secondary particle, a barrier layer may be present. The barrier layer may inhibit or mitigate the release of a transition metal from the primary particle and/or the secondary particle.

A grain boundary is defined between adjacent primary particles in the secondary particle. The barrier layer may be present in a diffused state from the surface portion to the central portion of the secondary particle along the grain boundary.

In one embodiment, the lithium manganese-based oxide may be represented by Formula 1 below.

[Formula 1] Li(LiₐM1ₓM2_{y})O_{2-b}X_{b}

Wherein,
M1 is at least one selected from Ni and Mn,
M2 is at least one selected from Ni, Mn, Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, and M2 does not overlap with M1,
X is a halogen that can substitute for at least some of the oxygen present in the lithium manganese-based oxide,
0<a≤0.7, 0<b≤0.1, 0<x≤1, 0≤y<1, and 0<x+y≤1.

In another embodiment, the lithium manganese-based oxide may be represented by Formula 1-1 below.

[Formula 1-1] rLi₂MnO_{3-b"}X'_{b"}·(1-r)Li_{a'}M1_{x'}M2_{y'}O_{2-b'}X_{b'}

Wherein,
M1 is at least one selected from Ni and Mn,
M2 is at least one selected from Ni, Mn, Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, and M2 does not overlap with M1,
X and X' are halogens that can substitute for at least some of the oxygens present in the lithium manganese-based oxide,
0<r≤0.7, 0<a'≤1, 0≤b'≤0.1, 0≤b"≤0.1, 0<x'≤1, 0≤y'<1, and 0<x'+y'≤1, provided that b' and b" are not 0 at the same time.

At least some of the oxygens present in the lithium manganese-based oxide may be substituted with a halogen, and preferably, fluorine. Specifically, the primary particle may be doped with fluorine.

During the calcination of an oxide precursor of the lithium manganese-based oxide, it is preferable that a halogen (e.g., fluorine) is doped into the primary particle, along with the induction of the crystal growth or particle growth of the primary particle.

In addition, another aspect of the present invention provides a positive electrode including the above-described positive electrode active material.

Moreover, still another aspect of the present invention provides a lithium secondary battery using the above-described positive electrode.

### DETAILED DESCRIPTION OF EXEMPLARY EMBODIMENTS

To better understand the present invention, certain terms are defined herein for convenience. Unless defined otherwise herein, scientific and technical terms used herein will have meanings commonly understood by those of ordinary skill in the art. In addition, unless specifically indicated otherwise, terms in a singular form also include plural forms, and terms in a plural form should be understood to include singular forms as well.

Hereinafter, a positive electrode active material including an overlithiated lithium manganese-based oxide and a lithium secondary battery including the positive electrode active material according to some embodiments of the present invention will be described in further detail.

### Positive electrode active material

According to one aspect of the present invention, a positive electrode active material including a lithium manganese-based oxide in which a phase belonging to a C2/m space group and a phase belonging to an R3-m space group are dissolved or complexed is provided.

The lithium manganese-based oxide includes at least lithium, nickel and manganese. Here, the lithium manganese-based oxide is also referred to as an overlithiated layered oxide (OLO) because the content of lithium present in the lithium manganese-based oxide is greater than the sum of the contents of other transition metals (generally, when the molar ratio (Li/Metal molar ratio) of lithium to all metal elements, other than lithium in the lithium manganese-based oxide is greater than 1).

Generally, considering that the content of manganese among all metal elements except lithium is 20 mol% or less in a commercially-available ternary lithium composite oxide with a nickel-cobalt-manganese (NCM) or nickel-cobalt-aluminum (NCA) composition, the lithium manganese-based oxide has a relatively high proportion of manganese (e.g., 50 mol% or more, and preferably, 55 to 75 mol%) among all metal elements relative to the commercially-available ternary lithium composite oxide.

In addition, considering that the content of nickel among all metal elements except lithium is 60 mol% or more (in the case of a high-Ni type, 80 mol% or more) in a commercially-available ternary lithium composite oxide with a nickel-cobalt-manganese (NCM) or nickel-cobalt-aluminum (NCA) composition, the lithium manganese-based oxide has a relatively low proportion (e.g., less than 50 mol%, and preferably, 25 to 45 mol%) of nickel among all metal elements relative to the commercially-available ternary lithium composite oxide.

The Li/Metal molar ratio measured from the lithium manganese-based oxide defined herein is higher than that of the ternary lithium composite oxide such as nickel-cobalt-manganese (NCM) or nickel-cobalt-aluminum (NCA). For example, the Li/Metal molar ratio of the ternary lithium composite oxide such as nickel-cobalt-manganese (NCM) or nickel-cobalt-aluminum (NCA) has a value close to almost 1. On the other hand, the Li/Metal molar ratio of the lithium manganese-based oxide defined herein is higher than 1, preferably 1.1 to 1.7, and more particularly, 1.2 to 1.6.

Despite the above-described difference in composition, the lithium manganese-based oxide can also serve as a composite metal oxide enabling intercalation/deintercalation of lithium ions.

The lithium manganese-based oxide included in the positive electrode active material defined herein includes a secondary particle formed by aggregating a plurality of primary particles. Here, in the lithium manganese-based oxide, a single particle, which is one primary particle, is present in some places.

Primary particles constituting the lithium manganese-based oxide may have various shapes in the range defined herein. For example, the primary particles may have a sheet shape, a rod shape, an oval shape and/or an irregular shape.

The conventional overlithiated lithium manganese-based oxides have a form of a secondary particle in which a plurality of primary particles are aggregated, generally primary particles with an average particle diameter of several to tens of nanometers.

On the other hand, primary particles constituting the lithium manganese-based oxide defined herein may have an average particle diameter of 0.1 to 5 µm, preferably 0.1 to 1.0 µm, and more preferably 0.25 to 0.75 µm as crystal growth or particle growth is induced.

The major axis length of the primary particle, the minor axis length of the primary particle, a ratio of the major axis length and the minor axis length of the primary particle (major axis length/minor axis length) and the average particle diameter of the primary particles ([major axis length+minor axis length]/2) may be calculated with the average values of the major axis lengths and the minor axis lengths of the primary particles exposed on the surface of a secondary particle, which have been measured in advance.

For example, for the calculation, the average value of the results measured from all primary particles exposed on the surface of the secondary particle or the average value of the results measured from a plurality of primary particles selected from among the primary particles exposed on the surface of the secondary particle (e.g., or calculated from a plurality (e.g., 10 or 20 primary particles) of primary particles selected in the order from longest-to-shortest minor axis lengths from the primary particles exposed on the surface of the secondary particle from the SEM image of the secondary particle) may be used.

When the average particle diameter of the primary particles is smaller than 0.1 µm, the specific surface area of the lithium manganese-based oxide (secondary particle) composed of the primary particles is relatively large. In this case, during the storage or operation of the lithium secondary battery, the possibility of causing side reactions between the lithium manganese-based oxide and a liquid electrolyte may increase.

On the other hand, when the average particle diameter of the primary particles is larger than 5 µm, as the growth of the primary particles is excessively induced, the diffusion path of lithium ions in the primary particles also becomes longer. When the diffusion path of lithium ions in the primary particles is excessively long, the mobility of lithium ions in the primary particles and the diffusivity of lithium ions mediated by the primary particles are degraded, which is a cause of increasing the resistance of the lithium manganese-based oxide (secondary particle) composed of the primary particles.

Accordingly, to reduce the specific surface area of the lithium manganese-based oxide, and at the same time, prevent the degradation in mobility of lithium ions in the primary particles and diffusivity of lithium ions mediated by the primary particles, the average particle diameter of the primary particles is preferably 0.1 to 5 µm, preferably 0.1 to 1.0 µm, and more preferably 0.25 to 0.75 µm.

Meanwhile, it is not possible to exactly know whether the growth of the primary particles is induced in a selective direction only with the average particle diameter of the primary particles defined herein. Accordingly, on the premise that the primary particles constituting the lithium manganese-based oxide defined herein satisfy the above-described average particle range, when satisfying the definition of a minor axis length to be described below, the specific surface area of the primary particle may be effectively reduced within the range of mitigating the degradation in diffusivity of lithium ions mediated by the primary particles.

The minor axis length measured for the primary particles exposed on the surface of the secondary particle in the SEM image of the secondary particle may be more than 75 nm and 500 nm or less. In addition, the minimum value of the minor axis length measured for the primary particle exposed on the surface of the secondary particle may be more than 75 nm, and preferably, 90 nm or more. The maximum value of the minor axis length measured for the primary particle exposed on the surface of the secondary particle may be 500 nm or less, and preferably, 450 nm or less.

In addition, the average value of the minor axis lengths of primary particles constituting the lithium manganese-based oxide may be 130 nm or more, preferably, 130 nm or more and less than 400 nm, and more preferably, 130 nm or more and 200 nm or less by doping the oxide precursor with a halogen while inducing the crystal growth or particle growth of the primary particle during calcination of an oxide precursor of the lithium manganese-based oxide. As described above, as the average value of the minor axis lengths of the primary particles, the average value of the results measured from all primary particles exposed on the surface of the secondary particle or a plurality (e.g., 10 or 20 primary particles) of primary particles selected in the order from longest-to-shortest minor axis lengths from the primary particles exposed on the surface of the secondary particle may be used.

As the proportion of primary particles with a minor axis length of 75 nm or less among the primary particles exposed on the surface of the secondary particle increases, the average value of the minor axis lengths of the primary particles is reduced. When the number of primary particles with a minor axis length of smaller than 500 nm among the primary particles exposed on the surface of the secondary particle is excessively large, the average value of the minor axis lengths of the primary particles may be less than 130 nm. The fact that the average value of the minor axis lengths of the primary particles is smaller than 130 nm means that the crystal growth or particle growth of the primary particles constituting the secondary particle is generally insufficient.

When the average value of the minor axis lengths of the primary particles is smaller than 130 nm, the specific surface area of the lithium manganese-based oxide (secondary particle) composed of the primary particles is relatively larger, and the possibility of side reactions between the lithium manganese-based oxide and a liquid electrolyte during the storage or operation of the lithium secondary battery may increase.

In addition, from the viewpoint of reducing the deviation of the minor axis length of the primary particle exposed on the surface of the secondary particle, the proportion of primary particles having minor axis lengths measured from a plurality (e. g., 10 or 20 primary particles) of primary particles selected in the order from longest-to-shortest minor axis lengths among all primary particles exposed on the surface of the secondary particle are 100 nm or more is more than 80% and 100% or less, and preferably 90% or more and 100% or less. As the deviation of the minor axis length of the primary particles exposed on the surface of the secondary particle is smaller, it is possible to uniformly maintain the surface kinetics of the secondary particle.

On the other hand, as the proportion of primary particles having the minor axis lengths of larger than 500 nm among the primary particles exposed on the surface of the secondary particle increases, the average value of the minor axis lengths of the primary particles increases. When the number of primary particles having the minor axis lengths of larger than 500 nm among the primary particles exposed on the surface of the secondary particle is excessively large, the average value of the minor axis lengths of the primary particles may be 400 nm or more. The fact that the average value of the minor axis lengths of the primary particles is 400 nm or more means that the growth of primary particles constituting the secondary particle was generally excessively induced.

Generally, in the process of preparing the lithium manganese-based oxide, when excessively calcined, the growth of the primary particles may be unnecessarily promoted. When the average value of the minor axis lengths of the primary particles is 400 nm or more, as the growth of the primary particles in a major axis direction is also excessively induced, it may be difficult to mitigate the degradation in diffusivity of lithium ions mediated by the primary particles.

When the lithium manganese-based oxide is present as a secondary particle formed by aggregating a plurality of primary particles, the average particle diameter of the secondary particle ([major axis length+minor axis length]/2) may be 0.5 to 15 µm. The average particle diameter of the secondary particle may vary according to the number of primary particles constituting the secondary particle. In addition, as the average particle diameter of the primary particles is increased by inducing the crystal growth or particle growth of the primary particles, the number of primary particles constituting the secondary particle may be reduced.

As such, as the lithium manganese-based oxide defined herein is composed of primary particles with induced crystal growth or particle growth, the specific surface area of the lithium manganese-based oxide may be reduced, and as the size of the primary particle increases, the degradation in diffusivity of lithium ions mediated by the primary particle may be mitigated. In addition, the degradation in charge transfer and/or diffusivity (that is, surface kinetics) of lithium ions on the surface of the lithium manganese-based oxide may be prevented.

In addition, as the crystal growth or particle growth of primary particles constituting the lithium manganese-based oxide defined herein is induced, the lithium manganese-based oxide may have an overall decreased specific surface area. Accordingly, the lithium manganese-based oxide may achieve sufficient surface kinetics and may also be enhanced in surface stability, thereby reducing side reactions between the lithium manganese-based oxide and the liquid electrolyte. As a result, the early deterioration of the positive electrode active material including the lithium manganese-based oxide defined herein may be prevented, which may contribute to an improvement in lifetime of a lithium secondary battery using the positive electrode active material.

The lithium manganese-based oxide defined herein may have a specific surface area of less than 2.53 m²/g. More specifically, by inducing the crystal growth or particle growth of the primary particle in a selective direction within the range of mitigating the degradation in diffusivity of lithium ions mediated by the primary particle, the lithium manganese-based oxide may have a BET specific surface area of more than 0.52 m²/g and less than 2.53 m²/g, preferably more than 0.52 m²/g and less than 2.27 m²/g, and more preferably, 0.62 m²/g or more and less than 1.20 m²/g.

While there are various methods of inducing the crystal growth or particle growth of the primary particle in the lithium manganese-based oxide, the effects intended by the present invention are not realized due to a difference between the methods of inducing the crystal growth or particle growth of the primary particles. According to the present invention, during the calcination of an oxide precursor of the lithium manganese-based oxide, a method of doping a halogen (specifically, fluorine) into the oxide precursor while inducing the growth of the primary particle is used. Meanwhile, even when halogen doping is induced during the calcination of a hydroxide precursor of the lithium manganese-based oxide or an oxide precursor of the lithium manganese-based oxide, since the crystal growth effect intended by the present invention may not be realized, for the detailed description related thereto, reference will be made to experimental examples to be described below.

Unless defined otherwise, the term "surface of the primary particle" used herein refers to the outermost surface of the primary particle exposed to the outside. Likewise, the term "surface of the secondary particle" used herein refers to the outermost surface of the secondary particle exposed to the outside. Here, the "surface of the secondary particle" formed by aggregating a plurality of primary particles corresponds to the exposed surface of the primary particle present on the surface portion of the secondary particle.

In addition, unless defined otherwise, the term "surface portion of a particle" used herein refers to a region relatively close to the "surface" of a particle, the "central portion of a particle" refers to a region relatively close to the "very center" of a particle, compared to the "surface portion." Accordingly, the "surface portion of a primary particle" refers to the region relatively close to the "surface" of the primary particle, and the "central portion of a primary particle" refers to the region relatively close to the "very center" of the primary particle compared to the "surface portion." Likewise, the "surface portion of a secondary particle" refers to the region relatively close to the "surface" of the secondary particle, and the "central portion of a secondary particle" refers to the region relatively close to the "very center" of the secondary particle compared to the "surface portion."

Here, a region excluding the "surface portion of a particle" within any particle may be defined as the "central portion of a particle."

For example, when the radius of the primary particle is r, the region in which the distance from the surface of the primary particle is 0 to 0.5r may be defined as the surface portion of the primary particle, and the region in which the distance from the very center of the primary particle is 0 to 0.5r may be defined as the central portion of the primary particle. When the radius of the primary particle is 0.5 µm, the surface portion of the primary particle may be defined as the region in which the distance from the surface of the primary particle is 0 to 0.25 µm, and the central portion of the primary particle may be defined as the region in which the distance from the very center of the primary particle is 0 to 0.25 µm.

In addition, if necessary, when the radius of the primary particle is r, the region in which the distance from the surface of the primary particle is 0 to 0.1r or 0 to 0.2r may be defined as the surface portion of the primary particle, and the region in which the distance from the very center of the primary particle is 0 to 0.2r or 0 to 0.5r may be defined as the central portion of the primary particle.

Likewise, when the radius of the secondary particle is r, the region in which the distance from the surface of the secondary particle is 0 to 0.5r may be defined as the surface portion of the secondary particle, and the region in which the distance from the very center of the secondary particle is 0 to 0.5r may be defined as the central portion of the secondary particle. When the radius of the secondary particle is 2.0 µm, the surface portion of the secondary particle may be defined as the region in which the distance from the surface of the secondary particle is 0 to 1.0 µm, and the central portion of the secondary particle may be defined as the region in which the distance from the very center of the secondary particle is 0 to 1.0 µm.

In addition, if necessary, when the radius of the secondary particle is r, the region in which the distance from the surface of the secondary particle is 0 to 0.1r or 0 to 0.2r may be defined as the surface portion of the secondary particle, and the region in which the distance from the very center of the secondary particle is 0 to 0.2r or 0 to 0.5r may be defined as the central portion of the secondary particle.

The lithium manganese-based oxide defined herein may be an overlithiated lithium manganese-based oxide represented by Formula 1 below. The composition represented by Formula 1 below may be the average composition reflecting the composition of a barrier layer present on at least a part of the surface of the lithium manganese-based oxide.

[Formula 1] Li(LiₐM1ₓM2_{y})O_{2-b}X_{b}

Wherein, M1 is at least one selected from Ni and Mn,
M2 is at least one selected from Ni, Mn, Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, and M2 does not overlap with M1,
X is a halogen that can substitute for at least some of the oxygen present in the lithium manganese-based oxide, 0<a≤0.7, 0<b≤0.1, 0<x≤1, 0≤y<1, and 0<x+y≤1.

For the type of halogen that can be used as X, refer to the periodic table, and F, Cl, Br and/or I may be used, and preferably, F may be used.

In addition, the overlithiated lithium manganese-based oxide represented by Formula 1 may further include a spinel phase other than a phase belonging to a C2/m space group and a phase belonging to an R3-m space group.

In another embodiment, the lithium manganese-based oxide may be represented by Formula 1-1 below. The composition represented by Formula 1-1 below may be the average composition reflecting the composition of a barrier layer present on at least a part of the surface of the lithium manganese-based oxide.

[Formula 1-1] rLi₂MnO_{3-b"}X'_{b"}·(1-r)Li_{a'}M1_{x'}M2_{y'}O_{2-b'}X_{b'}

Wherein,
M1 is at least one selected from Ni and Mn,
M2 is at least one selected from Ni, Mn, Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, and M2 does not overlap with M1,
X and X' are halogens that can substitute for at least some of the oxygens present in the lithium composite oxide, 0<r≤0.7, 0<a'≤1, 0≤b'≤0.1, 0≤b"≤0.1, 0<x'≤1, 0≤y'<1 and 0<x'+y'≤1, provided that b' and b" are not 0 at the same time.

For the types of halogens that can be used as X and X', refer to the periodic table, and F, Cl, Br and/or I may be used, and preferably, F may be used.

In Formulas 1 and 1-1, when M1 is Ni, M2 may include Mn, and when M1 is Mn, M2 may include Ni. In addition, when M1 is Ni and Mn, M2 may not be present, or when present, M2 may be an element other than Ni and Mn.

In other words, when M1 is Ni, M2 may include at least one selected from Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd (preferably, at least one selected from Co, Al, P, Nb, B, Ti, Zr, Ba, K, Mo, Si and W, more preferably, at least one selected from Co, P, B, Ti, Zr, Si and W, and even more preferably, at least one selected from P, B and Si), and Mn.

When M1 is Mn, M2 may include at least one selected from Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd (preferably, at least one selected from Co, Al, P, Nb, B, Ti, Zr, Ba, K, Mo, Si and W, more preferably, at least one selected from Co, P, B, Ti, Zr, Si and W, and even more preferably, at least one selected from P, B and Si), and Ni.

When M1 is Ni and Mn, M2 may include at least one selected from Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, preferably, at least one selected from Co, Al, P, Nb, B, Ti, Zr, Ba, K, Mo, Si and W, more preferably, at least one selected from Co, P, B, Ti, Zr, Si and W, and even more preferably, at least one selected from P, B and Si.

As described above, when halogen doping is performed to induce the crystal growth or particle growth of the primary particles constituting the lithium manganese-based oxide, at least some of the oxygens present in the lithium manganese-based oxide is preferably substituted with a halogen.

When an over-calcination method for thermal treatment at a relatively high temperature without halogen doping is used to induce the crystal growth or particle growth of the primary particle constituting the lithium manganese-based oxide, although crystal growth or particle growth of the primary particle is possible, it may cause damage to the crystal structure of the primary particle, so it is possible to cause early deterioration of the positive electrode active material.

In addition, in the case of an over-calcination method, while the growth of the primary particle exhibits non-directionality, when a halogen is doped during the growth of the primary particle, the growth of the primary particle may exhibit partial directionality, thereby mitigating the degradation in diffusivity of lithium ions according to the growth of the primary particles. Particularly, the use of fluorine as an anionic dopant for the growth of the primary particles is preferable for inducing the crystal growth or particle growth of the primary particles in a selective direction within the range of mitigating the degradation in diffusivity of lithium ions mediated by the primary particles.

For fluorine doping of the primary particles, at least one selected from LiF, MgF₂, HF, F₂, XeF₂, TbF₄, CeF₄, CoF₃, AgF₂, MoF₃, AgF, CuF₂, FeF₃, CuF, VF₃, CrF₃, ZrF₄, BaF₂, CaF₂, AlF₃, NH₄F, CeF₃ and CsF, and preferably, at least one selected from LiF and MgF₂ is used as an anionic dopant.

The content of fluorine doped into the primary particle may be predicted by the content of fluorine (that is, the values of b and b' of Formula 1) in the lithium manganese-based oxide represented by Formula 1. In addition, when neither b' nor b" is 0, b'+b" may be 0.2 or less, and preferably, 0.1 or less.

The lithium manganese-based oxide represented by Formula 1 or 1-1 may optionally include cobalt. When the lithium manganese-based oxide includes cobalt, the mole fraction of the cobalt relative to the number of moles of all metal elements in the lithium manganese-based oxide may be 20% or less, preferably, 15% or less, and more preferably, 10% or less. In another case, the lithium manganese-based oxide represented by Formula 1 or 1-1 may have cobalt-free composition, in which cobalt is not included.

The Li/Metal molar ratio measured from the lithium manganese-based oxide represented by Formula 1 or 1-1 may be greater than 1, preferably, 1.1 to 1.7, and more preferably, 1.2 to 1.6. It is possible to form an overlithiated lithium manganese-based oxide when the Li/Metal molar ratio measured from the lithium manganese-based oxide has a value greater than at least 1. In addition, in order for the lithium manganese-based oxide to properly form a solid solution in which a phase belonging to a C2/m space group and a phase belonging to an R3-m space group are dissolved or complexed and also exhibit a high capacity under a high voltage operating environment, the Li/Metal molar ratio of the lithium manganese-based oxide is preferably 1.2 to 1.6.

In addition, to properly form the solid solution in which the phase belonging to the C2/m space group and the phase belonging to the R3-m space group are dissolved or complexed, the content of manganese among all metal elements except lithium present in a lithium manganese-based oxide represented by Formula 1 or 1-1 is preferably 50 mol% or more.

In order for the lithium manganese-based oxide to have the characteristics of OLO exhibiting a high capacity under a high voltage operating environment, the content of manganese among all metal elements except lithium in the lithium manganese-based oxide is more preferably 50 mol% or more and less than 80 mol%, and even more preferably, 55 to 75 mol%. When the content of manganese in the lithium manganese-based oxide is more than 80 mol%, a phase transition may occur due to the migration of a transition metal (particularly, manganese) in the lithium manganese-based oxide during formation and/or operation of a lithium secondary battery. Such a phase transition forms a spinel phase, and the spinel phase acting as an impurity in the lithium manganese-based oxide may induce a decrease in charging/discharging capacities or voltage decay during the cycling of a lithium secondary battery.

To properly form a solid solution in which the phase belonging to the C2/m space group and the phase belonging to the R3-m space group are dissolved or complexed, the content of nickel among all metal elements except lithium in the lithium manganese-based oxide represented by Formula 1 or 1-1 is preferably less than 50 mol%.

When the content of nickel in the lithium manganese-based oxide is 50 mol% or more, since it is difficult to sufficiently form the C2/m phase, or the phase belonging to the C2/m space group and the phase belonging to the R3-m space group do not sufficiently form a solid solution, phase separation may be caused during formation and/or operation of a lithium secondary battery.

Generally, in a commercially-available ternary lithium composite oxide with a nickel-cobalt-manganese (NCM) or nickel-cobalt-aluminum (NCA) composition, the phase belonging to the R3-m space group is present as a single phase.

On the other hand, the overlithiated lithium manganese-based oxide represented by Formula 1 is present as a composite oxide in which an oxide of the phase belonging to the C2/m space group (hereinafter, referred to as "C2/m phase") represented by rLi₂MnO_{3-b"}X'_{b"} and an oxide of the phase belonging to the R3-m space group (hereinafter, referred to as "R3-m phase") represented by (1-r)Li_{a'}M1_{x'}M2_{y'}O_{2-b'}X_{b'} are dissolved or complexed. For example, the lithium manganese-based oxide may be present in a state in which the C2/m-phase oxide and the R3-m-phase oxide form a solid solution.

Here, a composite oxide in which the phase belonging to the C2/m space group and the phase belonging to the R3-m space group are simply physically and/or chemically bonded or attached does not correspond to the solid solution defined therein.

For example, a composite oxide having the phase belonging to the C2/m space group whose surface is coated with a metal oxide with the phase belonging to the R3-m space group by mixing a metal oxide having the phase belonging to the C2/m space group and the metal oxide with the phase belonging to the R3-m space group does not correspond to the solid solution defined herein.

In the lithium manganese-based oxide represented by Formula 1, when r is more than 0.7, since the proportion of Li₂MnO_{3-b"}X'_{b"}, which is a C2/m phase oxide, in the lithium manganese-based oxide is excessively large, the content of manganese in the positive electrode active material is excessively high, which may lower the discharge capacity. That is, to improve surface kinetics by sufficiently activating a C2/m-phase oxide with relatively high resistance in the lithium manganese-based oxide, the R3-m phase oxide is preferably present in a predetermined proportion or more.

In addition, when at least a part of the surface of the lithium manganese-based oxide defined herein, that is, the surface of the primary and/or secondary particles is covered with a barrier layer, the release of a transition metal from the lithium manganese-based oxide may be inhibited or mitigated.

As the barrier layer covers at least a part of the surface of the primary and/or secondary particle, the release of a transition metal from the primary and/or secondary particle to the outside may be inhibited or mitigated. Particularly, the barrier layer may cover the surface of the secondary particle to prevent side reactions between the surface of the secondary particle and a liquid electrolyte.

When the barrier layer covers a part of the surface of the secondary particle, the barrier layer may be present in the form of an island. That is, although the barrier layer covers at least a part of the surface of the secondary particle in the form of an island, the release of a transition metal through the region covered with the barrier layer may be inhibited or mitigated. Accordingly, that the barrier layer is present on the surface of the secondary battery has to be distinguished from that it is simply attached to the surface of the secondary particle while the lithium manganese-based oxide and a different type of oxide are dispersed.

In addition, a grain boundary is defined between adjacent primary particles in the secondary particles, and the barrier layer may be present while diffused from the surface portion to the central portion of the secondary particle along the grain boundary. As the barrier layer is diffused toward the central portion of the secondary particle, elements mainly included in the barrier layer may have a concentration gradient that decreases from the surface portion to the central portion of the secondary particle.

As the barrier layer has a gradient from the surface portion to the central portion of the secondary particle, the release of a transition metal usually from the surface portion of the secondary particle may be effectively inhibited or mitigated.

Some of the elements mainly included in the barrier layer may be doped into the primary particle and/or the secondary particle.

The average thickness of the barrier layer covering the surface of the secondary particle is preferably 0.1 nm to 1 µm.

When the average thickness of the barrier layer that covers the secondary particle is smaller than 0.1 nm, it may be difficult to sufficiently inhibit the release of a transition metal from the secondary particle. In contrast, when the average thickness of the barrier layer covering the secondary particle is larger than 1 µm, the surface kinetics or electrical conductivity of the secondary particle is likely to decrease.

As the barrier layer covers at least a part of the surface of the primary particle, the release of a transition metal from the primary particle to the outside may be inhibited or mitigated. In addition, as the barrier layer covers the surface of the primary particle, side reactions between the surface of the primary particle and a liquid electrolyte may be prevented. Here, as the barrier layer covers the surface of the primary particle present in the surface portion of the secondary particle, it may cover at least a part of the surface of the secondary particle. When the barrier layer covers a part of the surface of the primary particle and/or the secondary particle, the barrier layer may be present in the form of an island.

The average thickness of the barrier layer covering the surface of the primary particle is preferably 0.1 nm to 1 µm.

When the average thickness of the barrier layer covering the primary particle is smaller than 0.1n m, it may be difficult to sufficiently inhibit the release of a transition metal from the primary particle. In contrast, when the average thickness of the barrier layer covering the primary particle is larger than 1 µm, the surface kinetics or electrical conductivity of the secondary particle is likely to decrease.

In one embodiment, the barrier layer may include a first oxide represented by Formula 2 below.

[Formula 2] Li_{c}B_{d}M3ₑO_{f}

Wherein, M3 is at least one selected from Ni, Mn, Co, Al, Nb, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, 0≤c≤8, 0<d≤8, 0≤e≤8, and 2≤f≤13.

When the first oxide represented by Formula 2 is a borate-based compound or a lithium borate (LBO)-based compound, non-limiting examples of the first oxide include B₂O₃, Li₂O-B₂O₃, Li₃BO₃, Li₂B₄O₇, Li₂B₂O₇, and Li₂B₈O₁₃. In addition, the first oxide may have a composition in which the above-mentioned borate-based compound or LBO-based compound is optionally doped with a different type of element, M3.

Here, due to the diffusion and/or doping of the first oxide included in the barrier layer, a gradient in which the concentration of at least one selected from B and M3 decreases from the barrier layer to the core of the lithium manganese-based oxide may be formed.

Such a concentration gradient serves as a path for lithium-ion migration in the primary particle and between the primary particles, and thus the transport/diffusion efficiency of lithium ions mediated by the primary particle may be improved.

In another embodiment, the barrier layer may further include a second oxide represented by Formula 3 below.

[Formula 3] Li_{g}M4ₕOᵢ

Wherein, M4 is at least one selected from Ni, Mn, Co, Al, Nb, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, 0≤g≤8, 0≤h≤8, 2≤i≤13, and the case in which g and h are 0 at the same time is excluded.

Non-limiting examples of the second oxide represented by Formula 3 include Li_{g}ZrₕOᵢ, Li_{g}TiₕOᵢ, Li_{g}NiₕOᵢ, Li_{g}NbₕOᵢ, Li_{g}CoₕOᵢ, Li_{g}SiₕOᵢ, Li_{g}AlₕOᵢ, CoₕOᵢ, MnₕOᵢ, AlₕOᵢ, SiₕOᵢ, ZrₕOᵢ, and TiₕOᵢ.

Here, due to the diffusion and/or doping of the second oxide included in the barrier layer, a gradient in which the concentration of M4 decreases from the barrier layer to the core of the lithium manganese-based oxide may be formed.

In still another embodiment, the barrier layer may include a third oxide represented by Formula 4 below.

[Formula 4] LiⱼM5ₖ(PₗOₘ)ₙ

Wherein, M5 is at least one selected from Ni, Mn, Co, Al, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, 0≤j≤10, 0≤k≤8, 0<l≤4, 0<m≤10, 0<n≤13, and the case in which j and k are 0 at the same time is excluded.

Non-limiting examples of the third oxide represented by Formula 4 include Liⱼ (PₗOₘ)ₙ, LiⱼAlₖ(PₗOₘ)ₙ, Alₖ(PₗOₘ)ₙ, (PₗOₘ)ₙ, LiⱼMnₖ(PₗOₘ)ₙ, Mnₖ(PₗOₘ)ₙ, LiⱼNiₖ(PₗOₘ)_{n,and} Niₖ(PₗOₘ)ₙ.

Here, due to the diffusion and/or doping of the third oxide included in the barrier layer, a gradient in which the concentration of at least one selected from M5 and P decreases from the barrier layer to the core of the lithium manganese-based oxide may be formed.

It is known that a decrease in charging/discharging capacity or voltage decay during the cycling of a lithium secondary battery using OLO is caused by a phase transition caused by the migration of a transition metal in the lithium manganese-based oxide. For example, when a transition metal in a lithium manganese-based oxide having a layered crystal structure migrates in an unintended direction to induce a phase transition, a spinel or a crystal structure similar thereto may be generated entirely and/or partially in the lithium manganese-based oxide.

However, other than the spinel phase formed by the phase transition caused by the migration of a transition metal in the lithium manganese-based oxide, when a spinel phase is formed on the surface of the primary particle and/or the secondary particle, as well as inducing the crystal growth or particle growth of the primary particles constituting the lithium manganese-based oxide, such a spinel phase may not only contribute to the surface stabilization of the lithium manganese-based oxide, but also may serve as a 2D and/or 3D path through which lithium ions in the lithium manganese-based oxide diffuse. The spinel phase present on the surface of the primary particle and/or the secondary particle may be represented by Formula 4.

Accordingly, since there is a spinel-phase compound present in the barrier layer that is present to inhibit the release of a transition metal from the primary particle and/or the secondary particle, even when the surface of the primary particle and/or the secondary particle is covered with the barrier layer, the lithium manganese-based oxide may exhibit an appropriate level of electrical conductivity.

In addition, if needed, the barrier layer may include at least two oxides selected from the first to third oxides in order to effectively inhibit or mitigate the release of a transition metal from the lithium manganese-based oxide, and at the same time, to improve the surface kinetics of the lithium manganese-based oxide.

In addition, the main components of the barrier layer calculated based on all metal elements excluding lithium, present in the lithium manganese-based oxide, is preferably more than 0.1 mol% and less than 5 mol%. Here, when there is the first oxide in the barrier layer, the main components of the barrier layer are boron (B) and M3, and when there is the second oxide in the barrier layer, the main component of the barrier layer is M4, and when there is the third oxide in the barrier layer, the main component of the barrier layer is M5. In addition, when there is any combination of the first to third oxides in the barrier layer, the main component of the barrier layer is selected from boron (B), M3, M4 and M5.

That the content of the main component of the barrier layer is smaller than 0.1 mol% means that a barrier layer for inhibiting or mitigating the release of a transition metal is insufficiently formed on the surface of the lithium manganese-based oxide. Accordingly, it is difficult to effectively prevent acceleration of the lifetime deterioration of a lithium secondary battery due to the deposition of impurities on a positive electrode and/or a negative electrode by a transition metal released from the lithium manganese-based oxide.

On the other hand, when the content of the main components of the barrier layer is 5 mol% or more, the surface kinetics of the lithium manganese-based oxide may decrease and thus electrochemical properties may decrease, compared to when the main components of the barrier layer are present at appropriate contents.

In addition, in order to effectively inhibit or mitigate the release of a transition metal from the surface of the lithium manganese-based oxide within a range in which the surface kinetics of the lithium manganese-based oxide are not degraded, the contents of the main components of the barrier layer calculated based on all metal elements excluding lithium, present in the lithium manganese-based oxide, is more preferably 1±0.1 mol% or more and 3±0.1 mol% or less.

### Lithium secondary battery

According to another embodiment of the present invention, a positive electrode including a positive electrode current collector and a positive electrode active material layer formed on the positive electrode current collector may be provided. Here, the positive electrode active material layer may include the above-described positive electrode active material prepared by a preparation method according to various embodiments of the present invention as a positive electrode active material.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and a binder included optionally as needed.

Here, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to prepare a positive electrode.

In addition, in another exemplary embodiment, the positive electrode may be prepared by casting the positive electrode slurry composition on a separate support, and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator film and a liquid electrolyte, which are interposed between the positive electrode and the negative electrode. Here, since the positive electrode is the same as described above, for convenience, detailed description for the positive electrode will be omitted, and other components which have not been described below will be described in detail.

The lithium secondary battery may further include a battery case accommodating an electrode assembly of the positive electrode, the negative electrode and the separator film, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber, nitrile-butadiene rubber, fluorine rubber, and various copolymers thereof.

The conductive material is a component for further improving conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator film is not particularly limited as long as it is generally used in a lithium secondary battery to separate a negative electrode from a positive electrode and provide a diffusion path for lithium ions, and particularly, the separator film has a low resistance to ion mobility of a liquid electrolyte and an excellent electrolyte solution impregnation ability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator film including a ceramic component or a polymer material may be used to ensure thermal resistance or mechanical strength, and may be optionally used in a single- or multilayered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charge/discharge performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1: 1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element (here, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX (here, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (here, m and n are integers, and Z is Ge, Zn or Ga), Li₂S-GeS₂, Li₂S-SiS₂-Li₃PO₄, and Li₂S-SiS₂-LiₚMO_{q} (here, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type using a can. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

### Preparation Example 1. Preparation of positive electrode active material

### Example 1

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a N₂ gas was introduced into the reactor to perform a precursor synthesis reaction. After the reaction was completed, washing and dehydration were performed, thereby obtaining a hydroxide precursor with the composition of Ni_{0.4}Mn_{0.6}(OH)₂.

### (b) First thermal treatment

An oxide-type precursor was obtained by raising the temperature of a furnace with an O₂ atmosphere at a rate of 2 °C/min, thermally treating the hydroxide precursor obtained in (a) for 5 hours while maintaining the temperature at 550 °C, and performing furnace cooling.

### (c) Second thermal treatment

A mixture was prepared by mixing the oxide-type precursor obtained in (b), LiOH (Li/Metal molar ratio = 1.25) as a lithium raw material, and LiF in which the content of fluorine (F) was weighed to be 1.0 mol% based on metal elements except lithium in the precursor.

Subsequently, an overlithiated lithium manganese-based oxide was obtained by raising the temperature of a furnace with an O₂ atmosphere at a rate of 2 °C/min, maintaining the temperature at 900 °C, thermally treating the mixture for 8 hours, and performing furnace cooling.

### (d) Third thermal treatment (formation of barrier layer)

A final product (average particle diameter: 4.0 µm) in which a barrier layer including a B-containing compound is formed on a surface was obtained by mixing the lithium manganese-based oxide obtained in (c) and H₃BO₃ in which the content of boron was weighed to be 1.2 mol% based on metal elements excluding lithium in the lithium manganese-based oxide, thermally treating the resulting mixture for 8 hours in a furnace with an O₂ atmosphere, whose temperature was raised to 300 °C at a rate of 4.4 °C/min, and performing distribution and disintegration.

### Example 2

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a N₂ gas was introduced into the reactor to perform a precursor synthesis reaction. After the reaction was completed, washing and dehydration were performed, thereby obtaining a hydroxide precursor with the composition of Ni_{0.4}Mn_{0.6}(OH)₂.

### (b) First thermal treatment

An oxide-type precursor was obtained by raising the temperature of a furnace with an O₂ atmosphere at a rate of 2 °C/min, thermally treating the hydroxide precursor obtained in (a) for 5 hours while maintaining the temperature at 550 °C, and performing furnace cooling.

### (c) Second thermal treatment

A mixture was prepared by mixing the oxide-type precursor obtained in (b), LiOH (Li/Metal molar ratio = 1.25) as a lithium raw material, and LiF in which the content of fluorine (F) was weighed to be 1.0 mol% based on metal elements except lithium in the precursor.

Subsequently, an overlithiated lithium manganese-based oxide was obtained by raising the temperature of a furnace with an O₂ atmosphere at a rate of 2 °C/min, maintaining the temperature at 900 °C, thermally treating the mixture for 8 hours, and performing furnace cooling.

### (d) Wet pretreatment

A lithium manganese-based oxide in which SiO₂ is distributed on a surface was obtained introducing the lithium manganese-based oxide obtained in (c) and SiO₂ in which the Si content is weighed to be 1.0 mol% based on the metal elements except lithium in the lithium manganese-based oxide into distilled water under stirring and stirring the resulting mixture at 40 °C for 12 hours.

### (e) Third thermal treatment (formation of barrier layer)

A final product (average particle diameter: 4.0 µm) in which a barrier layer including an Si-containing compound is formed on a surface was obtained by thermally heating the lithium manganese-based oxide obtained in (d) for 8 hours in a furnace whose temperature was raised to 400 °C at a rate of 4.4 °C/min while maintaining an O₂ atmosphere, and performing distribution and disintegration.

### Example 3

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a N₂ gas was introduced into the reactor to perform a precursor synthesis reaction. After the reaction was completed, washing and dehydration were performed, thereby obtaining a hydroxide precursor with the composition of Ni_{0.4}Mn_{0.6}(OH)₂.

### (b) First thermal treatment

An oxide-type precursor was obtained by raising the temperature of a furnace with an O₂ atmosphere at a rate of 2 °C/min, thermally treating the hydroxide precursor obtained in (a) for 5 hours while maintaining the temperature at 550 °C, and performing furnace cooling.

### (c) Second thermal treatment

A mixture was prepared by mixing the oxide-type precursor obtained in (b), LiOH (Li/Metal molar ratio = 1.25) as a lithium raw material, and LiF in which the content of fluorine (F) was weighed to be 1.0 mol% based on metal elements except lithium in the precursor.

Subsequently, an overlithiated lithium manganese-based oxide was obtained by raising the temperature of a furnace with an O₂ atmosphere at a rate of 2 °C/min, maintaining the temperature at 900 °C, thermally treating the mixture for 8 hours, and performing furnace cooling.

### (d) Wet pretreatment

A lithium manganese-based oxide in which NH₄H₂PO₄ is distributed on a surface was obtained introducing the lithium manganese-based oxide obtained in (c) and NH₄H₂PO₄ in which the P content is weighed to be 3.0 mol% based on the metal elements except lithium in the lithium manganese-based oxide into distilled water under stirring and stirring the resulting mixture at 40 °C for 12 hours.

### (e) Third thermal treatment (formation of barrier layer)

A final product (average particle diameter: 4.0 µm) in which a barrier layer including a P-containing compound is formed on a surface was obtained by thermally heating the lithium manganese-based oxide obtained in (d) for 8 hours in a furnace whose temperature was raised to 400 °C at a rate of 4.4 °C/min while maintaining an O₂ atmosphere, and performing distribution and disintegration.

### Comparative Example 1

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a N₂ gas was introduced into the reactor to perform a precursor synthesis reaction. After the reaction was completed, washing and dehydration were performed, thereby obtaining a hydroxide precursor with the composition of Ni_{0.4}Mn_{0.6}(OH)₂.

### (b) First thermal treatment

An oxide-type precursor was obtained by raising the temperature of a furnace with an O₂ atmosphere at a rate of 2 °C/min, thermally treating the hydroxide precursor obtained in (a) for 5 hours while maintaining the temperature at 550 °C, and performing furnace cooling.

### (c) Second thermal treatment

A mixture was prepared by mixing the oxide-type precursor obtained in (b) and LiOH (Li/Metal molar ratio = 1.25) as a lithium raw material.

Subsequently, an overlithiated lithium manganese-based oxide (average particle diameter: 4.0 µm) was obtained by raising the temperature of a furnace with an O₂ atmosphere at a rate of 2 °C/min, maintaining the temperature at 900 °C, thermally treating the mixture for 8 hours, performing furnace cooling, and performing distribution and disintegration.

### Comparative Example 2

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a N₂ gas was introduced into the reactor to perform a precursor synthesis reaction. After the reaction was completed, washing and dehydration were performed, thereby obtaining a hydroxide precursor with the composition of Ni_{0.4}Mn_{0.6}(OH)₂.

### (b) First thermal treatment

An oxide-type precursor was obtained by raising the temperature of a furnace with an O₂ atmosphere at a rate of 2 °C/min, thermally treating the hydroxide precursor obtained in (a) for 5 hours while maintaining the temperature at 550 °C, and performing furnace cooling.

### (c) Second thermal treatment

A mixture was prepared by mixing the oxide-type precursor obtained in (b), LiOH (Li/Metal molar ratio = 1.25) as a lithium raw material, and LiF in which the content of fluorine (F) was weighed to be 1.0 mol% based on metal elements except lithium in the precursor.

Subsequently, an overlithiated lithium manganese-based oxide (average particle diameter: 4.0 µm) was obtained as a final product by increasing the temperature of the furnace with an O₂ atmosphere at a rate of 2 °C/min, maintaining the temperature at 900 °C, thermally treating the mixture for 8 hours, and performing furnace cooling, distribution, and disintegration.

### Comparative Example 3

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a N₂ gas was introduced into the reactor to perform a precursor synthesis reaction. After the reaction was completed, washing and dehydration were performed, thereby obtaining a hydroxide precursor with the composition of Ni_{0.4}Mn_{0.6}(OH)₂.

### (b) First thermal treatment

An oxide-type precursor was obtained by raising the temperature of a furnace with an O₂ atmosphere at a rate of 2 °C/min, thermally treating the hydroxide precursor obtained in (a) for 5 hours while maintaining the temperature at 550 °C, and performing furnace cooling.

### (c) Second thermal treatment

A mixture was prepared by mixing the oxide-type precursor obtained in (b) and LiOH (Li/Metal molar ratio = 1.25) as a lithium raw material.

Subsequently, an overlithiated lithium manganese-based oxide was obtained by raising the temperature of a furnace with an O₂ atmosphere at a rate of 2 °C/min, maintaining the temperature at 900 °C, thermally treating the mixture for 8 hours, and performing furnace cooling.

### (d) Third thermal treatment (formation of barrier layer)

A final product (average particle diameter: 4.0 µm) in which a barrier layer including a B-containing compound is formed on a surface was obtained by mixing the lithium manganese-based oxide obtained in (c) and H₃BO₃ in which the content of boron was weighed to be 1.2 mol% based on metal elements excluding lithium in the lithium manganese-based oxide, thermally treating the resulting mixture for 8 hours in a furnace with an O₂ atmosphere, whose temperature was raised to 300 °C at a rate of 4.4 °C/min, and performing distribution and disintegration.

### Comparative Example 4

### (a) Preparation of precursor

An aqueous solution in which NiSCO₄·6H₂O and MnSO₄·H₂O were mixed in a molar ratio of 40:60, NaOH and NH₄OH were added to a reactor and stirred. The temperature in the reactor was maintained at 45 °C, and a N₂ gas was introduced into the reactor to perform a precursor synthesis reaction. After the reaction was completed, washing and dehydration were performed, thereby obtaining a hydroxide precursor with the composition of Ni_{0.4}Mn_{0.6}(OH)₂.

### (b) First thermal treatment

An oxide-type precursor was obtained by raising the temperature of a furnace with an O₂ atmosphere at a rate of 2 °C/min, thermally treating the hydroxide precursor obtained in (a) for 5 hours while maintaining the temperature at 900 °C, and performing furnace cooling.

### (c) Second thermal treatment

A mixture was prepared by mixing the oxide-type precursor obtained in (b) and LiOH (Li/Metal molar ratio = 1.25) as a lithium raw material.

Subsequently, an overlithiated lithium manganese-based oxide was obtained by raising the temperature of a furnace with an O₂ atmosphere at a rate of 2 °C/min, maintaining the temperature at 900 °C, thermally treating the mixture for 8 hours, and performing furnace cooling.

### (d) Third thermal treatment (formation of barrier layer)

A final product (average particle diameter: 4.0 µm) in which a barrier layer including a B-containing compound is formed on a surface was obtained by mixing the lithium manganese-based oxide obtained in (c) and H₃BO₃ in which the content of boron was weighed to be 1.2 mol% based on metal elements excluding lithium in the lithium manganese-based oxide, thermally treating the resulting mixture for 8 hours in a furnace with an O₂ atmosphere, whose temperature was raised to 300 °C at a rate of 4.4 °C/min, and performing distribution and disintegration.

### Comparative Example 5

### (a) Preparation of precursor

An aqueous solution in which NiSO₄·6H₂O and MnSO₄·H₂O were mixed in a molar ratio of 40:60, NaOH and NH₄OH were added to a reactor and stirred. The temperature in the reactor was maintained at 45 °C, and a N₂ gas was introduced into the reactor to perform a precursor synthesis reaction. After the reaction was completed, washing and dehydration were performed, thereby obtaining a hydroxide precursor with the composition of Ni_{0.4}Mn_{0.6}(OH)₂.

### (b) First thermal treatment

An oxide-type precursor was obtained by raising the temperature of a furnace with an O₂ atmosphere at a rate of 2 °C/min, thermally treating the hydroxide precursor obtained in (a) for 5 hours while maintaining the temperature at 550 °C, and performing furnace cooling.

### (c) Second thermal treatment

A mixture was prepared by mixing the oxide-type precursor obtained in (b), LiOH (Li/Metal molar ratio = 1.25) as a lithium raw material, and LiF in which the content of fluorine (F) was weighed to be 1.0 mol% based on metal elements except lithium in the precursor.

Subsequently, an overlithiated lithium manganese-based oxide was obtained by raising the temperature of a furnace with an O₂ atmosphere at a rate of 2 °C/min, maintaining the temperature at 1,000 °C, thermally treating the mixture for 8 hours, and performing furnace cooling.

### (d) Third thermal treatment (formation of barrier layer)

A final product (average particle diameter: 4.0 µm) in which a barrier layer including a B-containing compound is formed on a surface was obtained by mixing the lithium manganese-based oxide obtained in (c) and H₃BO₃ in which the content of boron was weighed to be 1.2 mol% based on metal elements excluding lithium in the lithium manganese-based oxide, thermally treating the resulting mixture for 8 hours in a furnace with an O₂ atmosphere, whose temperature was raised to 300 °C at a rate of 4.4 °C/min, and performing distribution and disintegration.

### Composition of lithium manganese-based oxide

The composition (molar ratio for each element) of a lithium manganese-based oxide included in each of the positive electrode active materials prepared according to Preparation Example 1 was measured through ICP analysis. The measurement results are shown in Table 1 below.

**[Table 1]**

| Classification | Li/Me Molar ratio | Element content (mol%) | | | | |
|---|---|---|---|---|---|---|
| | | Ni | Mn | B | Si | P |
| Example 1 | 1.26 | 39.47 | 59.30 | 1.23 | - | - |
| Example 2 | 1.27 | 39.66 | 59.36 | - | 0.98 | - |
| Example 3 | 1.25 | 38.73 | 58.26 | - | - | 3.01 |
| Comparative Example 1 | 1.25 | 39.99 | 60.01 | - | - | - |
| Comparative Example 2 | 1.24 | 39.88 | 60.02 | - | - | - |
| Comparative Example 3 | 1.25 | 39.54 | 59.24 | 1.21 | - | - |
| Comparative Example 4 | 1.26 | 39.97 | 58.85 | 1.18 | - | - |
| Comparative Example 5 | 1.26 | 39.46 | 59.35 | 1.19 | - | - |

| | | | | | | |
|---|---|---|---|---|---|---|
| ^{∗}The Li/Metal Molar ratio is a molar ratio of lithium to all elements except lithium in the lithium manganese-based oxide. ^{∗}The element content (mol%) is calculated based on all elements except lithium in the lithium manganese-based oxide. | | | | | | |

### Preparation Example 2. Manufacture of lithium secondary battery (half-cell)

A positive electrode slurry was prepared by dispersing 90 wt% of each of the positive electrode active materials prepared according to Preparation Example 1, 4.5 wt% of carbon black and 5.5 wt% of a PVDF binder in N-methyl-2 pyrrolidone (NMP). The positive slurry was uniformly applied on an aluminum thin film with a thickness of 15 µm and dried under vacuum at 135 °C, thereby manufacturing a positive electrode for a lithium secondary battery.

The positive electrode, lithium foil as a counter electrode, a porous polyethylene film (Celgard 2300, thickness: 25 µm) as a separator, and a liquid electrolyte prepared by adding LiPF₆ at 1.15M in a solvent in which ethylene carbonate, dimethyl carbonate and ethyl methyl carbonate were mixed in a volume ratio of 2:4:4 were used, thereby manufacturing a half-cell.

### Preparation Example 3. Manufacture of lithium secondary battery (full-cell)

A positive electrode slurry was prepared by dispersing 90 wt% of each of the positive electrode active materials prepared according to Preparation Example 1, 4.5 wt% of carbon black and 5.5 wt% of a PVDF binder in N-methyl-2 pyrrolidone (NMP). The positive slurry was uniformly applied on an aluminum thin film with a thickness of 15 µm and dried under vacuum at 135 °C, thereby manufacturing a positive electrode for a lithium secondary battery.

The positive electrode, a graphite electrode as a counter electrode, a porous polyethylene film (Celgard 2300, thickness: 25 µm) as a separator, and a liquid electrolyte prepared by adding LiPF₆ at 1.15M in a solvent in which ethylene carbonate, dimethyl carbonate and ethyl methyl carbonate were mixed in a volume ratio of 2:4:4 were used, thereby manufacturing a full-cell.

### Experimental Example 1. Image analysis of positive electrode active material

After selecting a lithium manganese-based oxide in the form of a secondary particle from each of the positive electrode active materials prepared according to Preparation Example 1, an SEM image was obtained through photographing with a scanning electron microscope.

Subsequently, 20 primary particles were selected in the order from longest-to-shortest minor axis lengths from the primary particles exposed on the surface of the secondary particle from the SEM image using an Image analyzer program, and the major axis length and the minor axis length were measured. From the measurement results, the minimum value (A) of the minor axis length of the primary particle, the maximum value (B) of the minor axis length of the primary particle, the average value (C) of the minor axis of the primary particle, and the proportion (D) of primary particles with the minor axis length of 100 nm or more among the 20 primary particles were calculated.

In addition, the BET specific surface area (E) was measured from the nitrogen gas adsorption amount of the lithium manganese-based oxide at a liquid nitrogen temperature (77K) using a gas adsorption-specific surface area measuring device (BELSORP-mini II, MicrotaracBEL).

The measurement results are shown in Table 2 below.

**[Table 2]**

| Classification | A | B | C | D | E |
|---|---|---|---|---|---|
| Units | nm | nm | nm | % | m²/g |
| Example 1 | 95.3 | 358.0 | 173.6 | 95 | 0.68 |
| Example 2 | 97.9 | 362.3 | 173.9 | 95 | 1.09 |
| Example 3 | 96.4 | 359.7 | 174.1 | 95 | 1.13 |
| Comparative Example 1 | 75.0 | 237.2 | 127.5 | 80 | 2.53 |
| Comparative Example 2 | 93.1 | 344.1 | 165.7 | 95 | 1.04 |
| Comparative Example 3 | 74.1 | 238.3 | 128.4 | 80 | 2.27 |
| Comparative Example 4 | 665.2 | 2,230.6 | 1,120.5 | 100 | 0.71 |
| Comparative Example 5 | 200.1 | 531.5 | 411.2 | 100 | 0.52 |

Comparing the lithium manganese-based oxides included in the positive electrode active materials according to Example 1 (fluorine doping was induced during calcination of oxide precursor) and Comparative Example 1 (prepared under the same conditions as in Example 1, except that fluorine doping was not induced during calcination of an oxide precursor), it can be confirmed that the minimum value (A) of the minor axis length of the primary particle, which constitutes the lithium manganese-based oxide according to Example 1, the maximum value (B) of the minor axis length of the primary particle and the average value (C) of the minor axis length of the primary particle are higher than those in Comparative Example 1, and the BET specific surface area (E) was smaller than that in Comparative Example 1.

In other words, it can be confirmed that, during the calcination of the oxide precursor of the lithium manganese-based oxide, the BET specific surface area was reduced while growing the primary particle by doping a halogen (fluorine) into the primary particle as well as inducing the crystal growth or particle growth of the primary particle.

Likewise, it can be confirmed that the minimum value (A) of the minor axis length of the primary particle constituting the lithium manganese-based oxides according to Examples 2 and 3, which used different coating sources from that of Example 1, is higher than 75 nm, the maximum value (B) of the minor axis length of the primary particle is 500 nm or less, and the average value (C) of the minor axis length of the primary particle is 130 nm or more.

On the other hand, referring to the result of Comparative Example 5 in which the calcination temperature of the oxide precursor was 1,000 °C even when a raw material for fluorine doping was used during the calcination of the oxide precursor, it can be confirmed that, as the crystal growth or particle growth of the primary particle is excessively induced, the average value (C) of the minor axis length of the primary particle is higher than 400 nm.

In addition, referring to the result of Comparative Example 4 in which the crystal growth or particle growth of the primary particle was induced by raising the calcination temperature for the hydroxide precursor to 900 °C instead of fluorine doping induced during the calcination of an oxide precursor, it can be confirmed that the growth of a larger particle than the result of Comparative Example 5 was induced due to the excessively high calcination temperature in the process of converting the hydroxide precursor into the oxide precursor.

### Experimental Example 2. XPS analysis of positive electrode active material

Through XPS analysis on a lithium manganese-based oxide selected from the positive electrode active materials prepared according to Preparation Example 1, the content of a target element included in the lithium manganese-based oxide was measured.

Specifically, using an XPS depth profile analysis method (Ion energy 2000eV, spot size 200 µm), the change in content of the target element from the surface portion of the lithium manganese-based oxide (secondary particle) toward the lithium manganese-based oxide (secondary particle) was measured by increasing the etching time for the surface of the lithium manganese-based oxide.

The XPS analysis results are shown in Table 3 below.

**[Table 3]**

| Classification | Target element | Content of target element in surface portion (at%) | Content of target element after 100-sec etching (at%) | Content of target element after 200-sec etching (at%) | Content of target element after 400-sec etching (at%) |
|---|---|---|---|---|---|
| Example 1 | B | 42 | 11 | 7 | 0 |
| Example 2 | Si | 22 | 7 | 0 | 0 |
| Example 3 | P | 59 | 21 | 11 | 3 |

| | | | | | |
|---|---|---|---|---|---|
| *The content of target element (at%) is calculated based on all elements except lithium in the lithium manganese-based oxide. | | | | | |

Referring to the result of Table 3, it can be confirmed that the contents of target elements present in the surface portion of the lithium manganese-based oxides (secondary particles) according to Examples 1 to 3 are 20 at% or more. It is expected that the contents of target elements present in the surface portion of the lithium manganese-based oxides (secondary particles) are 20 at% or more because a barrier layer was formed in the surface portion of the lithium manganese-based oxide (secondary particle).

### Experimental Example 3. Evaluation of characteristics of lithium secondary battery (half-cell)

A charging/discharging experiment was performed on each of the lithium secondary batteries (half-cells) manufactured in Preparation Example 2 using an electrochemical analyzer (Toyo, Toscat-3100) at 25 °C in a voltage range of 2.0V to 4.6V at a discharge rate of 0.1 C to 5.0C to measure an initial charge capacity, an initial discharge capacity, an initial reversible efficiency, and a rate characteristic (rate capability (C-rate)).

The measurement results are shown in Table 4 below.

**[Table 4]**

| Classification | Initial charge capacity (0.1C-rate) | Initial discharge capacity (0.1C-rate) | Initial reversible efficiency | Rate capability (2C/0.1C) | Rate capability (5C/0.1C) |
|---|---|---|---|---|---|
| Units | mAh/g | mAh/g | % | % | % |
| Example 1 | 257.4 | 224.1 | 87.0 | 80.2 | 71.6 |
| Example 2 | 255.9 | 222.8 | 87.1 | 79.8 | 70.0 |
| Example 3 | 256.1 | 223.4 | 87.2 | 79.6 | 69.4 |
| Comparative Example 1 | 251.9 | 214.7 | 85.2 | 73.6 | 60.7 |
| Comparative Example 2 | 257.7 | 220.6 | 85.6 | 79.4 | 69.0 |
| Comparative Example 3 | 252.6 | 219.2 | 86.8 | 77.7 | 65.6 |
| Comparative Example 4 | 210.4 | 167.4 | 79.6 | 34.2 | 13.1 |
| Comparative Example 5 | 252.1 | 217.2 | 86.1 | 70.8 | 57.4 |

Referring to the result of Table 4, it can be confirmed that a lithium secondary battery using the positive electrode active material including the lithium manganese-based oxide (fluorine doping was induced during the calcination of an oxide precursor) according to Example 1 exhibits a larger initial charge capacity, a larger initial discharge capacity, a higher initial reversible efficiency and a larger discharge capacity than a lithium secondary battery using the positive electrode active material including the lithium manganese-based oxide (fluorine doping was not induced during the calcination of the oxide precursor) according to Comparative Example 1 or 3.

Meanwhile, referring to the result of Comparative Example 5 in which the calcination temperature was 1,000 °C even when a raw material for fluorine doping was used in the calcination of the oxide precursor, it can be confirmed that a rate capability may decrease compared to Comparative Examples 1 and 3.

For Comparative Example 5, it can be expected that a thermal damage to the lithium manganese-based oxide is caused by the excessively high calcination temperature during the second thermal treatment, and thus the rate capability decreases.

Referring to the result of Comparative Example 4 in which the crystal growth or particle growth of the primary particle was induced by raising the calcination temperature of a hydroxide precursor to 900 °C without induction of fluorine doping during the calcination of an oxide precursor, it can be confirmed that, in the process of converting the hydroxide precursor into the oxide precursor, early deterioration occurred in the positive electrode active material due to the thermal damage caused by the excessively high calcination temperature, and thus the electrochemical properties overall decrease.

### Experimental Example 4. Evaluation of electrochemical properties of lithium secondary battery (full-cell)

For lithium secondary batteries (full-cells) manufactured according to Preparation Example 3 using the positive electrode active materials according to Examples 1 to 3 and Comparative Example 2, 6 cycles of formation were completed using an electrochemical analyzer (Toyo, Toscat-3100) at 25 °C in a voltage range of 2.0V to 4.6V under the condition of 0.2C/0.2C, and then 300 cycles of charging/discharging were performed at 25 °C in a voltage range of 2.0V to 4.6V under the condition of 1C/1C. The initial (1^{st} cycle) discharge capacity, and rates of discharge capacity at the 100^{th} cycle, 200^{th} cycle and 300^{th} cycle relative to the initial discharge capacity (capacity retentions) were measured.

The measurement results are shown in Table 5 below.

**[Table 5]**

| Classification | Initial discharge capacity (mAh/g) | Capacity retention (%) | | |
|---|---|---|---|---|
| | | 100^{th} cycle | 200^{th} cycle | 300^{th} cycle |
| Example 1 | 182.3 | 97.7 | 96.5 | 95.6 |
| Example 2 | 181.7 | 97.8 | 95.8 | 93.1 |
| Example 3 | 181.8 | 97.5 | 95.9 | 91.0 |
| Comparative Example 2 | 178.4 | 94.9 | 77.5 | 65.7 |

Referring to the result of evaluating the full-cells in Table 5, in Comparative Example 2 in which a barrier layer was not formed on the surface of the lithium manganese-based oxide even when a raw material for fluorine doping was not used during the calcination of the oxide precursor, it can be confirmed that the capacity retention is rapidly reduced. It is expected that this result is because an abnormal resistance phenomenon occurs in a negative electrode due to the release of a transition metal from the lithium manganese-based oxide, and thus the lifetime deterioration of the lithium secondary battery is accelerated.

On the other hand, in Examples 1 to 3 in which a raw material for fluorine doping was used during the calcination of the oxide precursor and a barrier layer was formed on the surface of the lithium manganese-based oxide, it can be confirmed that better capacity retentions may be exhibited compared with Comparative Example 2 by preventing the release of a transition metal from the lithium manganese-based oxide and improving particle surface kinetics.

### Experimental Example 5. Experiment for release of transition metal

For the lithium secondary batteries (full-cells) manufactured in Preparation Example 3 using the positive electrode active materials according to Examples 1 to 3 and Comparative Example 2, 6 cycles of formation were completed using an electrochemical analyzer (Toyo, Toscat-3 100) at 25 °C in a voltage range of 2.0V to 4.6V under the condition of 0.2C/0.2C, and then the full-cells were charged/discharged for 2 cycles at 25 °C in a voltage range of 2.0V to 4.6V under the condition of, 0.05C/0.05C to stabilize. Subsequently, the full-cells were dissembled, the negative electrode was washed with a diethyl carbonate solvent, and the negative electrode was dried under vacuum at 60 °C and then recovered.

Only a negative electrode active material was isolated from Cu foil (current collector) of the recovered negative electrode, and the isolated negative electrode active material was subjected to ICP analysis, thereby measuring the contents of Ni and Mn included in the negative electrode active material.

In addition, for the lithium secondary batteries (full-cells) manufactured according to Preparation Example 3 using the positive electrode active materials according to Examples 1 to 3 and Comparative Example 2, 6 cycles of formation were completed using an electrochemical analyzer (Toyo, Toscat-3100) at 25 °C in a voltage range of 2.0V to 4.6V under the condition of 0.2C/0.2C, and then 300 cycles of charging/discharging were performed at 25 °C in a voltage range of 2.0V to 4.6V under the condition of 1C/1C. Subsequently, each full-cell was charged/discharged for 2 cycles at 25 °C in a voltage range of 2.0V to 4.6V under the condition of 0.05C/0.05C. Subsequently, the full-cell was dissembled, the negative electrode was washed with a diethyl carbonate solvent, and the negative electrode was dried under vacuum at 60 °C and then recovered.

Only a negative electrode active material was isolated from Cu foil (current collector) of the recovered negative electrode, and the isolated negative electrode active material was subjected to ICP analysis, thereby measuring the contents of Ni and Mn included in the negative electrode active material.

The measurement results are shown in Table 6 below.

**[Table 6]**

| | After formation | | After 300 cycles of charging/discharging | |
|---|---|---|---|---|
| Classification | Ni (ppm) | Mn (ppm) | Ni (ppm) | Mn (ppm) |
| Example 1 | 22 | 99 | 37 | 155 |
| Example 2 | 24 | 104 | 35 | 202 |
| Example 3 | 24 | 109 | 51 | 244 |
| Comparative Example 2 | 68 | 331 | 192 | 755 |

Referring to the results in Table 6, as expected in Experimental Example 4, it can be confirmed that the rapid lifetime deterioration in Comparative Example 2 is due to the increased content of the transition metal deposited in the negative electrode active material after formation or 300 cycles of charging/discharging.

Meanwhile in Examples 1 to 3, as the barrier layer was formed on the surface of the lithium manganese-based oxide, it can be confirmed that the content of the transition metal released to the negative electrode became smaller than that of Comparative Example 2.

According to the present invention, compared with a commercially-available ternary lithium composite oxide with a nickel-cobalt-manganese (NCM) or nickel-cobalt-aluminum (NCA) composition, it is possible to improve the limitations of the conventional overlithiated lithium manganese-based oxides, which have various disadvantages in terms of electrochemical properties and/or stability.

Specifically, the lithium manganese-based oxide according to the present invention includes a primary particle in which crystal growth or particle growth is induced in a selective direction. Here, as the growth of the primary particle is induced in a selective direction, the primary particle has a different shape from lithium manganese-based oxides known so far.

First, when the crystal growth or particle growth of a primary particle constituting the lithium manganese-based oxide is induced, the rapid degradation in battery performance by side reactions during an initial battery reaction under a high voltage condition may be prevented by reducing the specific surface area of the lithium manganese-based oxide.

When the specific surface area of the lithium manganese-based oxide is reduced, it is possible to reduce side reactions between the lithium manganese-based oxide and the liquid electrolyte. Particularly, OLO such as the lithium manganese-based oxide is advantageous for exhibiting a high capacity under a high voltage operating environment, and it is important to reduce side reactions between the lithium manganese-based oxide and the liquid electrolyte because the possibility of side reactions occurring between the lithium manganese-based oxide and the liquid electrolyte can be promoted as the operating voltage increases.

Therefore, as the side reactions between the lithium manganese-based oxide and the liquid electrolyte are reduced, the stability and lifetime of a lithium secondary battery using the lithium manganese-based oxide as a positive electrode active material may be improved. Particularly, it is possible for a lithium secondary battery with a positive electrode active material having suppressed side reactions with a liquid electrolyte to be operated at a higher voltage. In addition, as described above, when the growth of the primary particle is induced, the smaller the specific surface area of the lithium manganese-based oxide, the fewer the side reactions during the initial battery reaction under a high voltage condition. However, according to the growth of the primary particle, the diffusion path of lithium ions in the primary particle extends. Accordingly, the diffusivity of lithium ions mediated by the primary particle is degraded, which eventually causes an increase in resistance of the lithium manganese-based oxide.

According to the present invention, by enabling the crystal growth or particle growth of a primary particle constituting the lithium manganese-based oxide in a selective direction, there is an advantage in that the degradation in diffusivity of lithium ions mediated by the primary particle can be mitigated as the size of the primary particle increases.

In addition, as a barrier is formed on the surface of the lithium manganese-based oxide, the release of a transition metal from the lithium manganese-based oxide may be inhibited or mitigated, and therefore, impurity formation on the surface of the lithium manganese-based oxide may be prevented by a reaction of the released transition metal and a liquid electrolyte.

The transition metal released from the lithium manganese-based oxide and/or the impurities formed by the reaction between the released transition metal and a liquid electrolyte may migrate to a negative electrode using the liquid electrolyte as a medium, and the impurities may be deposited on the surface of the negative electrode to rapidly increase the resistance of the negative electrode. Accordingly, as described in the present invention, it is necessary to limit the unintended movement of a transition metal in a lithium secondary battery.

In other words, according to the present invention, by preventing the release of a transition metal from the lithium manganese-based oxide, the acceleration in lifetime deterioration of the lithium secondary battery due to the deposition of the impurities on a positive electrode and/or a negative electrode by the transition metal released from the lithium manganese-based oxide may be presented.

As such, when a positive electrode including the positive electrode active material defined herein is used, it is possible to prevent the degradation in electrochemical properties of a lithium secondary battery, including rate characteristics, caused by excess of lithium and manganese in conventional OLO, and realize high stability by reducing side reactions between the positive electrode active material and a liquid electrolyte during high-voltage operation.

In addition to the above effects, specific effects of the present invention will be described together while explaining specific details for carrying out the present invention.

In the above, the embodiments of the present invention have been described, but it will be understood by those of ordinary skill in the art that the present invention may be changed and modified in various ways by addition, alteration, or deletion of components without departing from the spirit of the present invention defined in the appended claims.

## Claims

1. A positive electrode active material comprising a lithium manganese-based oxide in which a phase belonging to a C2/m space group and a phase belonging to an R3-m space group are dissolved or complexed,
wherein the lithium manganese-based oxide comprises a secondary particle formed by aggregating a plurality of primary particles,
at least some of an oxygen present in the lithium manganese-based oxide are substituted with a halogen,
an average value of a minor axis lengths of the primary particles is 130 nm or more and less than 400 nm, and
a barrier layer that covers at least a part of a surfaces of the primary particle and the secondary particle is present.

2. The positive electrode active material of claim 1, wherein a minimum value of the minor axis length measured for the primary particle exposed on a surface of the secondary particle is higher than 75 nm.

3. The positive electrode active material of claim 1, wherein a maximum value of the minor axis length measured for the primary particle exposed on a surface of the secondary particle is 500 nm or less.

4. The positive electrode active material of claim 1, wherein a proportion of primary particles having the minor axis length of 100 nm or more among the primary particles exposed on a surface of the secondary particle is more than 80% and 100% or less.

5. The positive electrode active material of claim 1, wherein an average value of a major axis lengths and a minor axis lengths of the primary particles exposed on a surface of the secondary particle ([major axis length+minor axis length]/2) is 0.1 to 5 µm.

6. The positive electrode active material of claim 1, wherein the lithium manganese-based oxide is represented by Formula 1 below:
[Formula 1] Li(LiₐM1ₓM2_{y})O_{2-b}X_{b}
wherein
M1 is at least one selected from Ni and Mn,
M2 is at least one selected from Ni, Mn, Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, and M2 does not overlap with M1,
X is a halogen that can substitute for at least some of the oxygens present in the lithium manganese-based oxide,
0<a≤0.7, 0<b≤0.1, 0<x≤1, 0≤y<1, and 0<x+y≤1.

7. The positive electrode active material of claim 1, wherein the lithium manganese-based oxide is represented by Formula 1-1 below:
[Formula 1-1] rLi₂MnO_{3-b"}X'_{b"}·(1-r)Li_{a'}M1_{x'}M2_{y'}O_{2-b'}X_{b'}
wherein
M1 is at least one selected from Ni and Mn,
M2 is at least one selected from Ni, Mn, Co, Al, P, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd, and M2 does not overlap with M1,
X and X' are halogens that can substitute for at least some of the oxygens present in the lithium manganese-based oxide,
0<r≤0.7, 0<a'≤1, 0≤b'≤0.1, 0≤b"≤0.1, 0<x'≤1, 0≤y'<1, and 0<x'+y'≤1, provided that b' and b" are not 0 at the same time.

8. The positive electrode active material of claim 1, wherein the halogen comprises fluorine.

9. The positive electrode active material of claim 1, wherein the barrier layer is present to cover at least a part of the surface of the secondary particle.

10. The positive electrode active material of claim 9, wherein a grain boundary is defined between adjacent primary particles, and
the barrier layer is present in a diffused state from a surface portion to the central portion of the secondary particle along the grain boundary.

11. The positive electrode active material of claim 1, wherein the barrier layer is present to cover at least a part of the surface of the primary particle.

12. The positive electrode active material of claim 1, wherein the barrier layer comprises a first oxide represented by Formula 2 below:
[Formula 2] Li_{c}B_{d}M3ₑO_{f}
wherein
M3 is at least one selected from Ni, Mn, Co, Al, Nb, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd,
0≤c≤8, 0<d≤8, 0≤e≤8, and 2≤f≤13.

13. The positive electrode active material of claim 1, wherein the barrier layer comprises a second oxide represented by Formula 3 below:
[Formula 3] Li_{g}M4ₕOᵢ
wherein
M4 is at least one selected from Ni, Mn, Co, Al, Nb, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd,
0≤g≤8, 0≤h≤8, 2≤i≤13, and the case in which g and h are 0 at the same time is excluded.

14. The positive electrode active material of claim 1, wherein the barrier layer comprises a third oxide represented by Formula 4 below:
[Formula 4] LiⱼM5ₖ(PₗOₘ)ₙ
wherein
M5 is at least one selected from Ni, Mn, Co, Al, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd,
0≤j≤10, 0≤k≤8, 0<1≤4, 0<m≤10, 0<n≤13, and the case in which j and k are 0 at the same time is excluded.

15. The positive electrode active material of claim 1, wherein the barrier layer comprises at least one selected from a first oxide represented by Formula 2 below, a second oxide represented by Formula 3 below, and a third oxide represented by Formula 4 below:
[Formula 2] Li_{c}B_{d}M3ₑO_{f}
wherein
M3 is at least one selected from Ni, Mn, Co, Al, Nb, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd,
0≤c≤8, 0<d≤8, 0≤e≤8, and 2≤f≤13,
[Formula 3] Li_{g}M4ₕOᵢ
wherein
M4 is at least one selected from Ni, Mn, Co, Al, Nb, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd,
0≤g≤8, 0≤h≤8, 2≤i≤13, and the case in which g and h are 0 at the same time is excluded,
[Formula 4] LiⱼM5ₖ(PₗOₘ)ₙ
wherein
M5 is at least one selected from Ni, Mn, Co, Al, Nb, B, Ti, Zr, Ba, K, Mo, Si, Fe, Cu, Cr, Zn, Na, Ca, Mg, Pt, Au, Eu, Sm, W, V, Ta, Sn, Hf, Ce, Gd and Nd,
0≤j≤10, 0≤k≤8, 0<1≤4, 0<m≤10, 0<n≤13, and the case in which j and k are 0 at the same time is excluded.
